# EUROPEAN PATENT SPECIFICATION

(11) **EP 1 868 023 B1**
(45) Date of publication and mention of the grant of the patent: **01.04.2009**
(21) Application number: 06115262.5
(22) Date of filing: 12.06.2006
(51) Int. Cl.: G02B 23/12, G02B 23/10, F41G 1/00

(54) **Night vision arrangement**
Nachtsichtanordnung
Arrangement de vision nocturne

(43) Date of publication of application: 19.12.2007
(73) Proprietor: Patria Aviation Oy, 35600 Halli (FI)
(72) Inventor: Vuorenpää, Timo, 41400, Lievestuore (FI)
(74) Representative: Smolander, Jouni Juhani

(56) References cited:
- EP-A- 0 545 527
- DE-A1- 2 060 897
- US-A- 4 629 295
- US-A- 5 946 132
- US-A- 6 154 313

## Description

### Field of the invention

The present invention relates to a night vision arrangement.

### Background of the invention

Various technologies exist to facilitate night vision. Many night vision devices include an image intensifier to collect and amplify light. However, also other night vision technologies exist, such as thermal imaging. In an image intensifier device, captured light is guided to an image intensifier tube. Such a tube includes a photocathode converting photons into electrons. The tube multiplies the original number of photons by use of a microchannel plate. The electrons hit a phosphorous screen releasing photons. The intensified image is viewed through an eyepiece lens.

Night vision devices have been applied in combination with daylight vision devices. US patent no. 4,629,295 discloses a night vision instrument comprising a night vision device, such as an image intensifier, a daylight device, such as an ordinary telescope, and a mirror system arranged to enable viewing an image intensified by night vision device by an ocular of the daylight device. A problem with this solution is that this arrangement requires an image intensifier specifically designed for the arrangement and does not enable magnification greater than one.

US-A-5946132 discloses a telescopic sight comprising one light path for day viewing and another path for night viewing. The sight comprises mirrors and a beamsplitter/combiner means to combine the paths for viewing. The night viewing system and the day viewing system are provided at the same side of the beamsplitter/combiner.

DE2060897 discloses a helmet-mountable night vision device.

EP-A-0545527 discloses a day/night weapon sight comprising a red dot aiming portion, a combining mirror (14), and a removable night vision portion having an objective lens, an eyepiece, and an image intensification tube for intensifying a received image intermediate the objective lens and the eyepiece. The night vision portion is mounted in front of a daylight vision system.

### Brief description of the invention

An object of the invention is to provide an enhanced night vision arrangement. This objection may be achieved by a night vision arrangement and an apparatus, which are characterized by what is disclosed in the independent claims. Some embodiments of the invention are set forth in the dependent claims.

In an embodiment, the night vision arrangement comprises an adjuster for aligning the night vision unit with the daylight vision unit.

Yet in one embodiment of the invention, the optical arrangement comprises a semi-transparent prism or mirror configured as a beam splitter in the optical axis of the daylight vision unit, and the optical arrangement comprises a prism or mirror projecting an intensified image from the night vision unit towards the semi-transparent prism or mirror.

The embodiments of the invention provide several advantages. The present arrangement is particularly suitable for aiming purposes. It is possible to use a magnifying night vision unit, which is not possible when applying the arrangement presented in the above-mentioned publication. It is also possible to attain a better resolution for night vision than in conventional arrangements. Further, the daylight and the night vision units may be used simultaneously and there is no need to remove the night vision unit during day time, as with conventional arrangements in which the daylight and night time imaging units are positioned consecutively on the same optical axis. A compact structure is possible by the present night vision arrangement and conventional night vision units may be applied and attached to the optical arrangement and the daylight vision unit. The further advantage of the embodiment providing the adjuster between the night vision unit and the daylight vision unit is that alignment may be corrected and accuracy can be improved when used for sighting. Thus, it is possible to use an aiming indicator in the night vision unit.

### Brief description of the drawings

In the following, the invention will be described in further detail by means of some embodiments and with reference to the accompanying drawings, in which
Figure 1 is a block diagram illustrating a night vision arrangement according to an embodiment of the invention;
Figure 2 is an example of a night vision arrangement according to an embodiment of the invention;
Figure 3 is a block diagram illustrating a night vision arrangement comprising a red-dot sight according to an embodiment of the invention; and
Figure 4 is a block diagram illustrating a night vision arrangement according to an embodiment of the invention.

### Detailed description of embodiments

The night vision arrangement in the following embodiments is specifically suitable for aiming purposes, yet without limiting the invention to that kind of technology. The invention can be applied in night vision apparatuses suitable for other purposes, such as for surveillance.

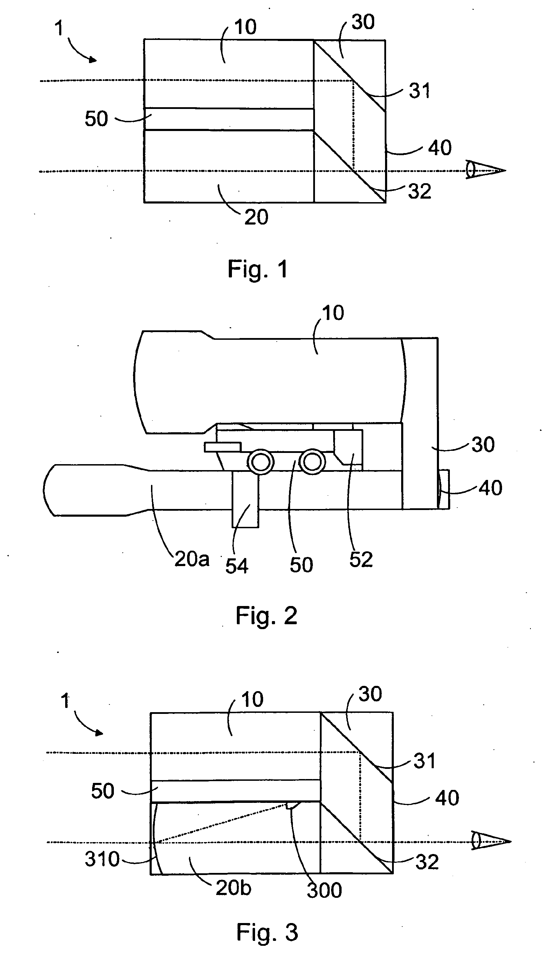

Figure 1 illustrates a night vision arrangement 1 according to an embodiment. The arrangement 1 comprises a night vision unit 10 or a night vision imaging unit 10, a daylight vision unit 20 or a daylight imaging unit 20, an optical arrangement 30 for projecting an image from the night vision unit 10 into an optical axis of the daylight vision unit 20, an eyepiece 40, which may be any suitable user view unit, which may be provided as part of the optical arrangement 30, and mounting 50. The mounting 50 may be fixed or adjustable.

The night vision unit 10 and the daylight vision unit 20 are provided at one side of the optical arrangement 30 and an eyepiece 40 is provided at the other side of the optical arrangement 30 for viewing an image passed by the optical arrangement 30 from the daylight vision unit 20 and the image projected by the optical arrangement 30 from the night vision unit 10. Hence, the exit pupils of the daylight vision unit 20 and the night vision unit 10 are provided at the opposite side of the eyepiece 40 and images from these exit pupils are viewed via the optical arrangement 30.

In one embodiment, the night vision unit 10 is an image intensifier, yet without limiting the invention to that kind of technology. The present features can be applied in night vision apparatuses applying other night vision technologies, such as thermal imaging. The present structure supports usage of different image intensifiers. For instance, current generation 2, 2+, 3, or 4 image intensifier technologies compliant night vision devices may be applied, without limiting the application of the invention to these technologies.

The current structure of the night vision arrangement 1 is particularly advantageous, since it enables applying magnification in the night vision unit 10. Hence, in one embodiment the night vision unit 10 comprises means for magnifying the image. The present structure enables the use of night vision devices provided with magnification capabilities, known per se, in the apparatus 1.

The daylight vision unit 20 may be a sight, a telescope or another type of imaging system for daylight viewing. The optical arrangement 30 in the embodiment of Figure 1 comprises a prism system 31 and a beam splitter 32. Various already available prisms may be used to form the prism system 31. The beam splitter 32 is configured to reflect the wavelength of the night vision unit 10 and pass the wavelength of the daylight vision unit 20. Hence, the beam splitter 32 passes an image from the daylight vision unit 20 to the user view portion 40 and projects an intensified image from the night vision unit 10 to the user view portion 40. For instance, the beam splitter 32 may be a semiconducting mirror or a prism.

However, it is to be noted that the embodiment of Figure 1 is only one example of an optical system that may be applied. For instance, one or more mirrors may be used instead of or to supplement the prism system 31. The optical arrangement 30 may comprise further elements, such as one or more correction lenses. For instance, such lens(es) may be arranged for moving the exit pupil of the night vision unit 10 to the same position to the user view portion 40 to achieve even further enhanced accuracy for nigh vision. In one embodiment, the optical arrangement 30 is an independent unit that may be mounted in the night vision unit 10, the daylight vision unit 20, and/or the mounting 50.

There are many alternatives for providing the mounting 50, only some of which are illustrated herein. The mounting may attach three or more of the components, such as units 10, 20, 30 and/or their sub-components, in the arrangement 1. For instance, the mounting 50 may be a separate unit connected to the night vision unit 10 and the daylight vision unit 20, or fasteners in the night vision unit 10 and in the daylight vision unit 20 may form the mounting 50. The optical arrangement 30 may be attached to the daylight vision unit 20 and/or night vision unit 10 by fasteners providing attachment to various already known daylight vision units and/or night vision units. In one embodiment, the units 10, 20, 30 of the arrangement 1 are removable, whereby one or more of the fasteners of the mounting 50 enable securing and releasing of such a unit. As will be illustrated below, the mounting 50 may be adjustable.

The arrangement 1 may also comprise a further mounting (not shown) for further mounting the night vision arrangement 1. Such further mounting may be provided on the night vision unit 10, the daylight vision unit 20, the optical arrangement 30, and/or by the mounting 50, depending on the desired mounting position and placing of the units. Since also the mounting 50 may be provided in different positions, the night vision unit 10 may be provided on top of, in either side of, or below the daylight vision unit 20.

In the present embodiment, the arrangement 1 is an aiming or a sight system mountable on a weapon body. Hence, the night vision unit 10 is a night vision aiming or sight unit, and the daylight vision unit 20 is a daylight aiming or sight unit 20. This embodiment is illustrated by further examples below. The arrangement 1 may be provided with further weapon mounts (not shown) for various weapon types. For instance, the arrangement 1 could be mounted on an assault riffle or medium size weapons, such as machine guns and recoilless guns. A separate weapon mount can be configured to fit to a wide variety of weapons and mounts.

The night vision aiming unit 10 and/or the daylight aiming unit 20 are/is provided by at least one aiming indicator (not shown), such as an aiming mark, an aiming reticle, or an aiming range indicator, which may be illuminated.

If the aiming indicator is provided in the daylight aiming unit 20, the present configuration enables the use of the aiming indicator in the daylight aiming unit 20 also during night-time use: If the aiming indicator is illuminated, it can also be seen in dark conditions when the night vision aiming unit 10 is used. This embodiment is advantageous, since no aiming indicator is necessary in the night vision aiming unit 10, and there is no need for re-alignment when changing between the night vision aiming unit 10 and the daylight aiming unit 20, if the magnification is one.

In one embodiment, there is an adjuster for adjusting the positioning of the night vision unit 10 and the daylight vision unit 20. In one embodiment, the aiming indicator is provided in the night vision aiming unit 10, whereby the adjuster is applied to provide corrective alignment enabling avoidance of possible orientation errors. The adjuster may comprise actuators for horizontal and vertical adjustment. The adjuster is used for adjusting the optical axis of the night vision unit 10 with the optical axis of the daylight vision unit 20 so as to avoid aiming errors. In one embodiment, aiming indicators of the daylight aiming unit 20 and the night vision aiming unit 10 are both seen through the eyepiece 40. By using these actuators, the user may provide correction by adjusting these aiming indicators to overlap.

The adjuster also provides the advantage of enabling magnification of more than one; if the magnification of the night vision unit 10 is one, the adjuster is not always necessary. The adjuster may be provided in the mounting unit 50. One example of an adjuster is illustrated in Figure 2.

Figure 2 illustrates one embodiment of the night vision arrangement 1, in which the daylight vision unit 20 is a telescope 20a and the mounting 50 provides an adjuster 52 with horizontal and vertical adjustment actuators.

Figure 3 illustrates an embodiment in which the daylight aiming unit 20 is a red-dot sight unit 20b. The red-dot sight unit 20a comprises a diode 300 emitting red light and a lens 310 reflecting the red light to the viewer's line of sight, other light passing through the (double) lens 310 substantially unobstructed. The beam splitter 32 passes the red-dot light and the red-dot can also be used during night time. Already known red-dot sighting technologies or units may be applied, and the application of the present invention is not limited to any specific red-dot sight technology. The unit 20b is provided with a suitable connector enabling mounting to the night vision aiming unit 10 or the mounting 50. The unit 20b may also be removable.

A conventional night vision and red-dot sighting arrangement includes an image intensifier and a red-dot sight consecutively, i.e. on the same optical axis without any optics such as the optical arrangement 30. As compared to such a conventional arrangement, the present arrangement of the aiming units 10, 20b and the optical arrangement 30 illustrated in Figure 3 enables a broader field of view. Further, there is a danger of the red light emitted from the red-dot sight damaging the image intensifier during daylight in such a conventional system, whereas this problem may be avoided in the present solution and the red-dot does not need to be removed. Further, the present solution does not change the appearance of the red dot during night vision use, but the red dot remains well distinguishable, whereas in the conventional arrangement, the red dot may change to a white dot and the visibility of this aiming mark is weakened. The present solution also enables magnification greater than one, whereas in such a conventional system such magnification is not available.

The red dot sight unit 20b may be provided with active or passive adjustment for the dot brightness, allowing a bright dot for high visibility in bright conditions, and a dim dot to prevent loss of night vision in low light conditions.

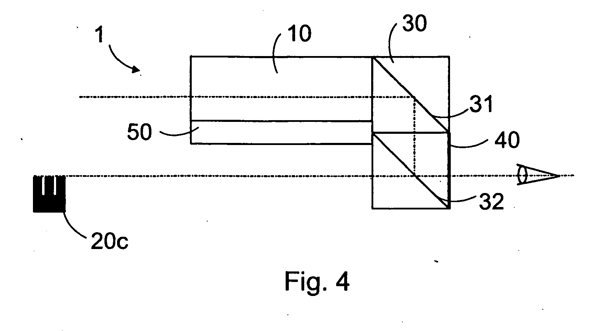

Figure 4 illustrates a further embodiment in which the daylight vision unit 20 is a conventional sight 20c, such as an iron sight. The mounting 50 may attach the night vision unit 10 and/or the optical arrangement 30 to a body of an apparatus (not shown), such as a body of a firearm. In this embodiment, an aiming indicator in the night vision unit 10 may be used during dark light conditions, and an adjusting may be provided in the mounting 50 to align the night vision unit 10 with the iron sight 20c.

In one embodiment, the night vision unit 10 is removable from the rest of the arrangement 1. The mounting 50 may be configured by a locking enabling easy removal and attachment of the night vision unit 10. Also the portion of the optical arrangement 30 facing the night vision unit 10, and/or a portion in the night vision unit 10 facing the optical arrangement 30, may be provided with guide(s) for correct positioning of the night vision unit 10. This embodiment enables attachment of another imaging unit, such as a thermal camera or a camera apparatus, to the arrangement 1.

The above illustrated features related to a night vision arrangement may be applied in a wide variety of devices and purposes. For instance, at least some of the above illustrated features may be applied in devices for one or more of the following applications areas: Law enforcement, military, hunting, wildlife observation, surveillance, security, navigation, hidden-object detection, and entertainment. Various further appliances may be combined with the above illustrated night vision arrangement. For instance, a still or a video camera device may be attached to the arrangement 1.

The accompanying drawings and the description pertaining to them are only intended to illustrate the present invention. Different variations and modifications to the invention will be apparent to those skilled in the art, without departing from the scope of the invention defined in the appended claims. Different features may thus be omitted, modified or replaced by equivalents.

## Claims

1. A night vision arrangement (1) comprising a daylight vision unit (20), a night vision unit (10) and an optical arrangement (30) for projecting an image from the night vision unit (10) into the optical axis of the daylight vision unit (20), wherein the night vision unit (10) and the daylight vision unit (20) are provided at one side of the optical arrangement (30) and means (40) is provided at the other side of the optical arrangement (30) for viewing an image passed by the optical arrangement (30) from the daylight vision unit (20) and the image projected by the optical arrangement (30) from the night vision unit (10), the night vision unit (10) is a night vision aiming unit and the daylight vision unit (20) is a daylight aiming unit, **characterized in that**
the daylight vision unit (20) is provided with an aiming indicator,
the optical arrangement (30) is an independent unit mountable to the night vision unit (10) and the daylight vision unit (20), and
the arrangement (1) comprises a mounting (50) for attachment and removal of the night vision unit (10) and optical arrangement (30) from the rest of the arrangement (1).

2. A night vision arrangement according to claim 1, **characterized in that** daylight vision unit (20) is a red-dot aiming device.

3. A night vision arrangement according to any one of preceding claims, **characterized in that** the night vision, arrangement (1) comprises an adjuster for aligning the night vision unit (10) with the daylight vision unit (20).

4. A night vision arrangement according to claim 3, **characterized in that** the adjuster is provided in mounting (50) between the daylight vision unit (20) and the night vision unit (10) and comprises actuators for horizontal and vertical adjustment.

5. A night vision arrangement according to any one of preceding claims, **characterized in that** the optical arrangement (30) comprises a semi-transparent prism or mirror (32) configured as a beam splitter in the optical axis of the daylight vision unit (20), and
the optical arrangement (30) comprises a prism or mirror projecting an intensified image from the night vision unit (10) towards the semi-transparent prism or mirror (32).

6. An apparatus embodying night vision means, **characterized in that** the night vision apparatus comprises a night vision arrangement (1) according to any one of claims 1 to 5.

## Patentansprüche

1. Nachtsichtanordnung (1) aufweisend: eine Tagessichteinheit (20), eine Nachtsichteinheit (10) und eine optische Anordnung (30) zum Projizieren eines Bildes von der Nachtsichteinheit (10) auf die optische Achse der Tagessichteinheit (20), worin die Nachtsichteinheit (10) und die Tagessichteinheit (20) auf einer Seite der optischen Anordnung (30) vorgesehen sind und Mittel (40) auf der anderen Seite der optischen Anordnung (30) vorgesehen sind, um ein von der Tagessichteinheit (20) durch die optische Anordnung (30) übermitteltes Bild und das von der Nachtsichteinheit (10) durch die optische Anordnung (30) projizierte Bild anzusehen, und die Nachtsichteinheit (10) eine Nachtsichtrichteinheit und die Tagessichteinheit (20) eine Tageslichtrichteinheit ist, **dadurch gekennzeichnet, dass**
die Tagessichteinheit (20) mit einem Richtanzeiger versehen ist,
die optische Anordnung (30) eine unabhängige Einheit ist, die an die Nachtsichteinheit (10) und die Tagessichteinheit (20) montierbar ist, und
die Anordnung (1) einen Träger (50) für Befestigung und Entfernung der Nachtsichteinheit (10) und der optischen Anordnung (30) von der restlichen Anordnung (1) aufweist.

2. Nachtsichtanordnung nach Anspruch 1, **dadurch gekennzeichnet, dass** die Tagessichteinheit (20) ein Rotpunkt-Richtgerät ist.

3. Nachtsichtanordnung nach einem der vorhergehenden Ansprüche, **dadurch gekennzeichnet, dass** die Nachtsichtanordnung (1) eine Einstellvorrichtung zur Ausrichtung der Nachtsichteinheit (10) mit der Tagessichteinheit (20) aufweist.

4. Nachtsichtanordnung nach Anspruch 3, **dadurch gekennzeichnet, dass** die Einstellvorrichtung im Träger (50) zwischen der Tagessichteinheit (20) und der Nachtsichteinheit (10) vorgesehen ist und Stellgeräte zur horizontalen und vertikalen Einstellung aufweist.

5. Nachtsichtanordnung nach einem der vorhergehenden Ansprüche, **dadurch gekennzeichnet, dass** die optische Anordnung (30) ein halbdurchsichtiges Prisma oder einen halbdurchsichtigen Spiegel (32) aufweist, das/der als Strahlteiler auf der optischen Achse der Tagessichteinheit (20) konfiguriert ist, und
die optische Anordnung (30) ein Prisma oder einen Spiegel aufweist, das/der ein verstärktes Bild von der Nachtsichteinheit (10) in Richtung auf das halbdurchsichtige Prisma oder den halbdurchsichtigen Spiegel (32) projiziert.

6. Eine Nachtsichtmittel enthaltende Vorrichtung, **dadurch gekennzeichnet, dass** die Nachtsichtvorrichtung eine Nachtsichtanordnung (1) nach einem der Ansprüche 1 bis 5 aufweist.

## Revendications

1. Agencement de vision nocturne (1) comprenant une unité de vision de jour (20), une unité de vision nocturne (10) et un agencement optique (30) pour projeter une image depuis l'unité de vision nocturne (10) dans l'axe optique de l'unité de vision de jour (20), dans lequel l'unité de vision nocturne (10) et l'unité de vision de jour (20) sont disposées sur un côté de l'agencement optique (30) et des moyens (40) sont situés sur l'autre côté de l'agencement optique (30) pour observer une image diffusée par l'agencement optique (30) depuis l'unité de vision de jour (20) et l'image projetée par l'agencement optique (30) depuis l'unité de vision nocturne (10), l'unité de vision nocturne (10) est une unité de visée à vision nocturne et l'unité de vision de jour (20) est une unité de visée de jour, **caractérisé en ce que**
l'unité de vision de jour (20) est équipée d'un indicateur de visée,
l'agencement optique (30) est une unité indépendante adaptable sur l'unité de vision nocturne (10) et sur l'unité de vision de jour (20), et
l'agencement (1) comprend un support (50) pour la mise en place de l'unité de vision nocturne (10) et de l'agencement optique (30) sur le reste de l'agencement (1) et pour le retrait de cette unité de vision nocturne (10) et de cet agencement optique (30) par rapport à ce reste de l'agencement (1).

2. Agencement de vision nocturne selon la revendication 1, **caractérisé en ce que** l'unité de vision de jour (20) est un dispositif de visée à point rouge.

3. Agencement de vision nocturne selon l'une quelconque des revendications précédentes, **caractérisé en ce que** l'agencement de vision nocturne (1) comprend un organe de réglage pour aligner l'unité de vision nocturne (10) avec l'unité de vision de jour (20).

4. Agencement de vision nocturne selon la revendication 3, **caractérisé en ce que** l'organe de réglage est agencé dans le support (50) entre l'unité de vision de jour (20) et l'unité de vision nocturne (10) et comprend des dispositifs d'actionnement pour le réglage horizontal et vertical.

5. Agencement de vision nocturne selon l'une quelconque des revendications précédentes, **caractérisé en ce que** l'agencement optique (30) comprend un prisme ou un miroir (32) semi-transparent configuré comme un séparateur de faisceau dans l'axe optique de l'unité de vision de jour (20), et
l'agencement optique (30) comprend un prisme ou un miroir projetant une image intensifiée depuis l'unité de vision nocturne (10) vers le prisme ou le miroir semi-transparent (32).

6. Appareil incluant des moyens de vision nocturne, **caractérisé en ce que** l'appareil de vision nocturne comprend un agencement de vision nocturne (1) selon l'une quelconque des revendications 1 à 5.
